## Europäisches Patentamt

## European Patent Office

## Office européen des brevets

(19)

(11) Numéro de publication: **0 072 262 B1**

(12) **FASCICULE DE BREVET EUROPÉEN**

(45) Date de publication du fascicule du brevet: **26.11.86**

(51) Int. Cl.⁴: **B 60 K 5/12, F 16 F 9/10**

(21) Numéro de dépôt: **82401021.9**

(22) Date de dépôt: **04.06.82**

(54) **Cale élastique, notamment pour la suspension d'un moteur de véhicule.**

(30) Priorité: **07.08.81 FR 8115355**

(43) Date de publication de la demande:
**16.02.83 Bulletin 83/7**

(45) Mention de la délivrance du brevet:
**26.11.86 Bulletin 86/48**

(84) Etats contractants désignés:
**DE GB IT**

(56) Documents cité:
**EP-A-0 042 908**
**EP-A-0 042 910**
**FR-A-2 119 169**
**FR-A-2 415 241**
**FR-A-2 448 663**
**FR-A-2 448 673**
**FR-A-2 467 724**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Poupard, Dominique, 8 Route du Pavé des Gardes, F-92370 Chaville (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1986

EP 0 072 262 B1

## Description

L'invention concerne une cale élastique destinée à relier à un support rigide un organe ou un ensemble sur lequel s'exercent des excitations de différentes natures. A titre d'exemple d'application, ces cales sont plus particulièrement adaptées à la suspension d'un moteur thermique par rapport à la structure d'un véhicule automobile.

On sait que, sur un véhicule automobile, les cales élastiques utilisées pour la suspension du moteur doivent assurer à la fois un bon filtrage des vibrations à haute fréquence et faible amplitude dues aux imperfections d'équilibrage du moteur, et un bon amortissement des trépidations à basse fréquence et forte amplitude provenant de la route.

Ce double résultat est obtenu avec une cale du type comprenant deux chambres remplies de liquide, délimitées au moins en partie par des parois élastiques et séparées par une cloison comprenant une partie mobile qui peut se déplacer très librement entre deux positions extrêmes suivant une direction perpendiculaire à son plan moyen, des moyens pour limiter les déplacemets de la partie mobile auxdites positions extrêmes, et un canal de grande longueur et de faible section qui assure une communication entre les deux chambres.

Une cale élastique de ce type est décrite dans la demande de brevet FR-A- 2.467.724. Dans cette cale connue, la partie mobile de la cloison est constituée par une pièce qui comprend une partie centrale massive à peu près indéformable, et une partie périphérique mince et souple serrée entre deux éléments rigides qui constituent la partie extérieure fixe de la cloison. Ces deux éléments rigides portent des organes limiteurs du débattement de la partie mobile et délimitent entre eux le canal de grande longueur qui relie les deux chambres.

Cette solution présente l'inconvénient de faire appel pour constituer la cloison à trois pièces qu'il faut assembler manuellement, en immersion dans le liquide prévu pour remplir les chambres de la cale afin d'éviter la formation de bulles d'air.

Le document FR-A-2 448 673 décrit une cale élastique dans laquelle la cloison et sa partie mobile peuvent être réalisées en une seule pièce à base de matériau élastomère, ce qui simplifie sa fabrication, par rapport à la solution précédente. Mais, dans ce cas, cette cloison est percée de courts canaux, aucun canal de grande longueur n'étant prévu. Lorsqu'un canal de grande longueur est prévu, il est constitué par une pièce rapportée à la cloison mobile, ce qui complique la réalisation et conduit à une masse mobile importante dont l'inertie est préjudiciable au bon fonctionnement du support.

L'invention a essentiellement pour but de simplifier la réalisation des cales élastiques du type précité, grâce à l'utilisation d'une cloison ne comportant qu'une seule pièce obtenue par moulage, cette cloison incluant les moyens pour limiter les déplacements de sa partie centrale mobile et ménageant, à sa périphérie, un dégagement qui, après assemblage, délimitera avec les armatures un canal de grande longueur.

La cale élastique connue par le FR-A-2 467724 et definie dans le préambule de la revendication 1, est du type comprenant deux chambres remplies de liquide, délimitées au moins en partie par des parois élastiques et séparées par une cloison comprenant une partie mobile qui peut se déplacer très librement entre deux positions extrêmes, suivant une direction perpendiculaire à son plan moyen, des moyens pour délimiter les déplacements de la partie mobile auxdites positions extrêmes, et un canal de grande longueur et de faible section qui assure une communication entre les deux chambres.

Conformément à l'invention, la cloison et sa partie mobile sont réalisées en une seule pièce à base de matériau élastomère incluant les moyens pour limiter les déplacements de la partie mobile, le canal de grande longueur est délimité en partie par un dégagement périphérique de la cloison et en partie par des armatures de la cale qui enserrent la partie périphérique de la cloison.

Suivant un premier mode de réalisation, la cloison comporte une partie périphérique massive, peu déformable, reliée à la partie mobile centrale par un voile mince formant au moins une onde circulaire.

Suivant un autre mode de réalisation, la cloison comporte une partie périphérique massive, peu déformable, et une partie centrale mobile formée d'une série de pavés en élastomère séparés par des sillons étroits, ces pavés étant reliés entre eux et à la partie périphérique par un voile mince.

Des exemples de réalisation font l'objet de la description qui suit, en référence aux dessins joints dans lesquels:

- la Fig. 1 est une vue en coupe axiale d'une cale suivant l'invention;
- la Fig. 2 est une vue partielle en plan de la cloison de séparation de la cale représentée à la Fig. 1;
- les Fig. 3 et 4 sont des vues prises en coupe suivant une ligne correspondant à la ligne 3-3 de la Fig. 2, de deux variantes de cette cloison;
- la Fig. 5 est une vue, prise en coupe suivant la ligne 5-5 de la Fig. 6, d'une autre variante de réalisation de la cloison de séparation;
- la Fig. 6 est une vue en plan de la cloison représentée à la Fig. 5;
- la Fig. 7 est une vue en plan d'une armature utilisable dans la cloison représentée aux Fig. 5 et 6; et
- la Fig. 8 est une variante, vue en plan, de la cloison représentée aux Fig. 5 et 6.

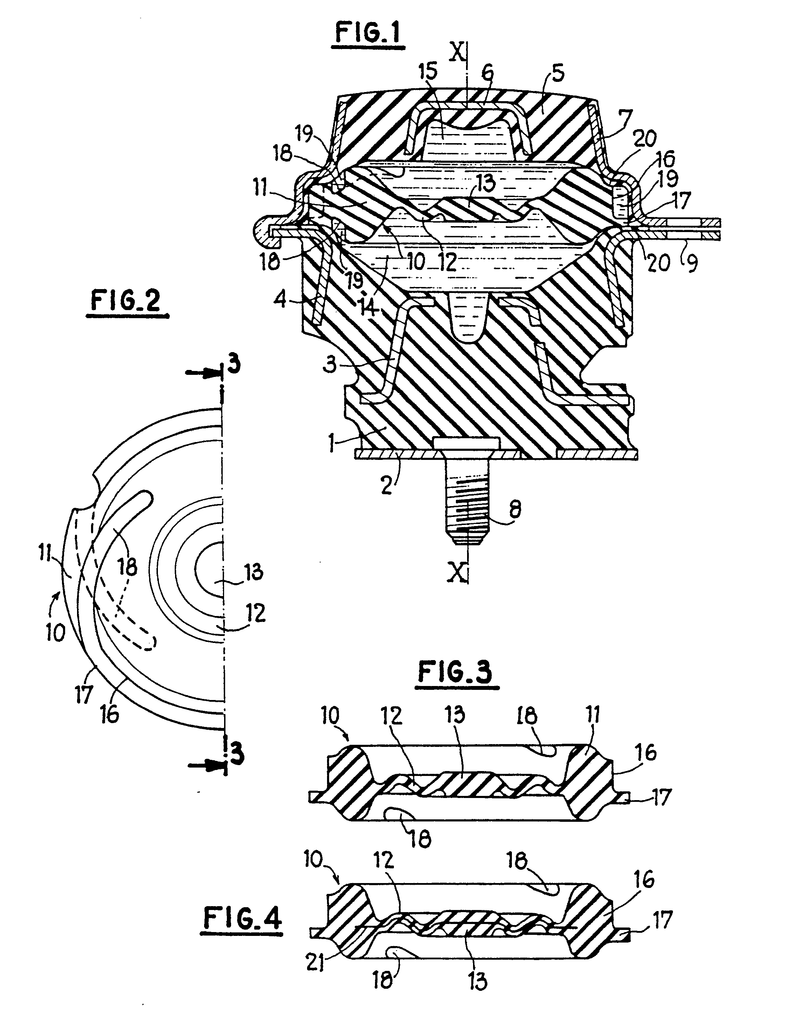

La cale représentée aux Fig. 1 et 2, qui est pour l'essentiel de révolution autour d'un axe X-X, comprend notamment, d'une part, un bloc en élastomère 1 adhérisé sur trois armatures 2, 3, 4, dont une armature centrale 3 et deux armatures d'extrémité 2 et 4, et, d'autre part, un bloc en élastomère 5 adhérisé sur deux armatures 6 et 7, dont une armature intérieure 6 et une armature d'extrémité 7.

L'armature 2 est destinée à être fixée à la structure d'un véhicule automobile au moyen d'une vis 8, tandis que les armatures 4 et 7, fixées l'une à l'autre, par exemple par sertissage périphérique, sont destinées à être reliées, au niveau d'orifices de fixation 9, au moteur non représenté du véhicule.

Une cloison intérieure monobloc 10, en caoutchouc ou en matière plastique souple (par exemple en polyuréthane), comporte une partie périphérique massive 11 serrée entre les armatures 4 et 7. Cette partie périphérique est reliée par une zone annulaire mince 12 en forme d'onde circulaire à un disque central plus épais 13 qui constitue une partie mobile suivant une direction perpendiculaire à son plan moyen, c'est-à-dire suivant l'axe X-X.

La cloison 10 délimite avec le bloc en élastomère 1 une première chambre 14 et, avec le bloc en élastomère 5, une seconde chambre 15, toutes deux entièrement remplies de liquide.

Sur environ les trois quarts de son pourtour, la partie périphérique 11 comporte un dégagement cylindrique 16 à une extrémité duquel est définie une collerette radiale 17. Ce dégagement se prolonge à chaque extrémité par une rainure hélicoïdale 18 s'étendant sur environ un quart de tour et débouchant sur une face d'extrémité de la cloison 10.

Lorsque la cale est assemblée, les armatures 4 et 7 délimitent avec le dégagement 16, la collerette 17 et les deux rainures 18 un espace périphérique 19 continu qui forme un canal circulaire de grande longueur et faible section reliant les deux chambres 14 et 15, ce canal s'étendant sur un peu plus d'un tour. La collerette 17 facilite le centrage de la cloison 10.

Il est souhaitable que, comme représenté, les parties des armatures 4 et 7 en contact avec la cloison 10 soient revêtues d'une mince couche d'élastomère 20 adhérisée en même temps que le bloc 1 ou 5 correspondant.

La cale qui vient d'être décrite fonctionne comme celle qui fait l'objet de la demande de brevet français 79 26 137 précitée:

Pour de faibles amplitudes de vibration, le disque central 13 est libre de se déplacer, grâce à la libre déformation en flexion courbe de la zone annulaire 12. La cale possède alors une très faible raideur, ce qui permet d'assurer un excellent filtrage des vibrations à haute fréquence engendrées par le moteur.

Le déplacement du disque central 13 est pratiquement stoppé lorsque l'onde circulaire formant la zone annulaire 12 est déployée, le matériau travaillant alors en tension. Le liquide doit alors passer d'une chambre à l'autre en empruntant le canal 19. Il en résulte une augmentation importante de la raideur et de l'amortissement favorable à la diminution des trépidations à forte amplitude et basse fréquence provenant de l'état de la route.

La cloison représentée à la Fig. 3 ne diffère de la précédente que par la présence de deux ondes circulaires dans la zone annulaire 12 qui relie la partie périphérique 11 au disque central 13.

La cloison représentée à la Fig. 4 est analogue à la précédente mais est réalisée en caoutchouc armé par une toile 21 en fibres plastiques ou en tissu métallique fin. Cette armature se déforme librement perpendiculairement à son plan général, c'est-à-dire suivant la direction X-X, jusqu'à ce que les ondes formant la zone annulaire 12 soient déployées.

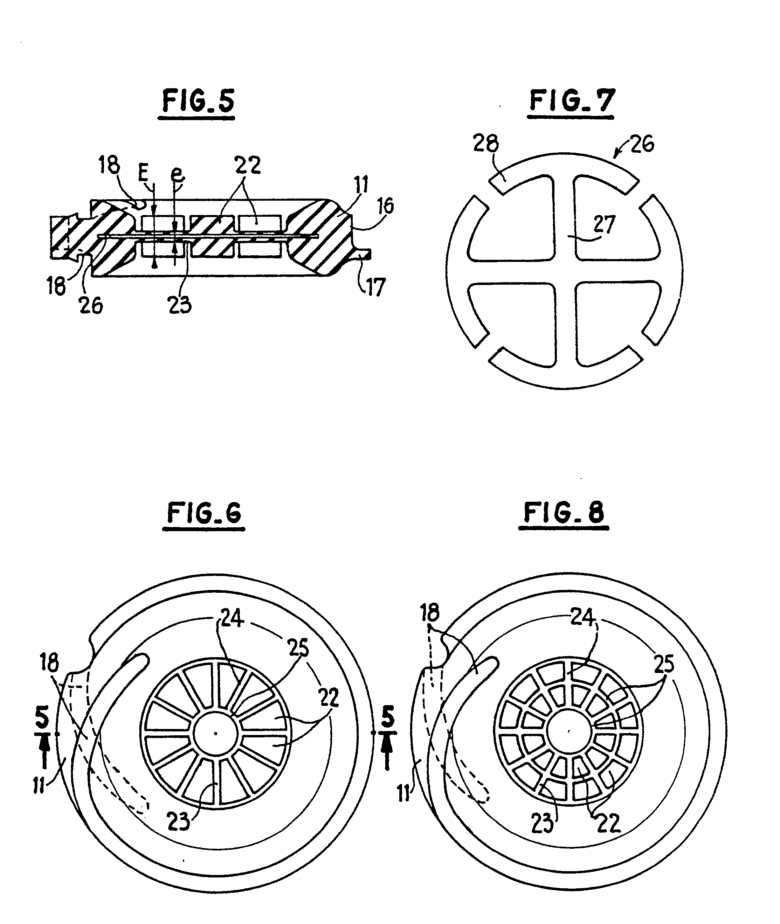

La cloison représentée à la Fig. 5 est également réalisée en caoutchouc armé. Elle ne diffère de celle des Fig. 1 à 4 que par le fait que sa partie centrale mobile est formée d'une série de pavés 22 recouvrant une région circulaire et faisant saillie symétriquement sur les deux faces d'un voile mince 23. Ces pavés 22 sont séparés les uns des autres par des sillons radiaux 24 et circulaires 25 de faible largeur.

Dans cet exemple, la partie mobile se déforme facilement suivant la direction X-X par flexion courbe jusqu'à ce que les bords des pavés 22 entrent en contact mutuel sur la face concave. L'épaisseur de caoutchouc fléchi augmente alors brusquement, entraînant pratiquement un arrêt du déplacement. Pour fixer les idées, si $e$ représente l'épaisseur du caoutchouc au fond des sillons, c'est-à-dire l'épaisseur du voile 23 et $E$ l'épaisseur au droit des pavés 21, il est souhaitable d'avoir $E \geqslant 3e$, la largeur des sillons pouvant être de l'ordre du millimètre.

La Fig. 7 représente une armature 26 réalisée en clinquant et utilisable avec la cloison des Fig. 5 et 6. Le découpage de ce clinquant est prévu pour qu'il puisse se déformer avec de faibles efforts perpendiculairement à son plan. A cet effet, il est formé de bras radiaux 27 noyés dans le voile 23 et terminés par des tronçons de couronne 28 qui servent à l'ancrage dans la partie périphérique 11 de la cloison.

La cloison représentée à la Fig. 8 ne diffère de la précédente que par la présence d'un sillon circulaire 25 supplémentaire.

Ainsi, dans chacun des modes de réalisation cidessus, la cale est facile à assembler, grâce à la réalisation de la cloison 10 en une seule pièce, et la limitation du déplacement de la partie centrale de cette cloison est assurée par une simple diminution brusque de flexibilité suivant la direction X-X.

**Revendications**

1 - Cale élastique, du type comprenant deux chambres (14, 15) remplies de liquide, délimitées au moins en partie par des parois élastiques et séparées par une cloison (10) comprenant une partie mobile (13; 22) qui peut se déplacer très librement entre deux positions extrêmes, suivant une direction (X-X) perpendiculaire à son plan moyen, des moyens (12;25,26) pour limiter les déplacements de la partie mobile auxdites positions extrêmes, et un canal (19) de grande longueur et de faible section qui assure une communication entre les deux chambres, caractérisée en ce que

la cloison (10) et sa partie mobile (13; 22) sont réalisées en une seule pièce à base de matériau élastomère incluant les moyens (12;25,26) pour limiter les déplacements de la partie mobile (13;22),

et en ce que le canal de grande longueur (19) est délimité en partie par un dégagement périphérique (16) de la cloison (10) et en partie par des armatures (4, 7) de la cale qui enserrent la partie périphérique (71) de la cloison.

2- Cale élastique suivant la revendication 1, caractérisée en ce que le dégagement (16) s'étend dans un plan sur presque tout le tour de la cloison (10) et se prolonge à chaque extrémité par une rainure hélicoïdale (18) qui s'écarte de ce plan et débouche dans une des deux chambres (15, 16).

3 - Cale élastique suivant l'une des revendications 1 et 2, caractérisée en ce que la cloison (10) comporte une partie périphérique (11) massive et peu déformable, reliée à la partie mobile centrale (13) par un voile mince (12) formant au moins une onde circulaire.

4 - Cale élastique suivant la revendication 3, caractérisée en ce que la partie centrale (13) et le voile (12) comportent une armature de renforcement (21) déformable dans la direction de déplacement (X-X) de la partie centrale.

5 - Cale élastique suivant l'une des revendications 1 et 2,caractérisée en ce que la cloison (10) comporte une partie périphérique (11) massive et peu déformable, et une partie centrale mobile formée d'une série (22) de pavés en élastomère séparés par des sillons étroits (25, 26), ces pavés étant reliés entre eux et à la partie périphérique par un voile mince (23).

6 - Cale élastique suivant la revendication 5, caractérisée en ce que le voile mince (23) contient une armature de renforcement (26) déformable dans la direction de déplacement (X-X) de la partie centrale (22).

7 - Cale élastique suivant l'une des revendications 5 et 6, caractérisée en ce que la partie centrale (22) est circulaire, les sillons (25,26) étant circulaires concentriques et/ou radiaux.

## Patentansprüche

1. Elastischer Unterlageblock mit zwei flüssigkeitsgefüllten Kammern (14, 15), welche wenigstens teilweise durch elastische Wände begrenzt und durch eine Trennwand (10) getrennt sind, welche einen beweglichen Teil (13; 22) aufweist, welcher sich sehr frei zwischen zwei Endlagen in einer Richtung (X-X) senkrecht zu seiner Mittelebene bewegen kann, Mittelm (12; 25, 26) zur Begrenzung der Bewegungen des beweglichen Teils auf diese Endlagen, und einem Kanal (19) großer Länge und geringen Querschnitts, welcher für eine Verbindung zwischen den beiden Kammern sorgt, dadurch gekennzeichnet, daß die Trendwand (10) und ihr beweglicher Teil (13; 22) durch ein einziges Teil auf der Grundlage eines elastomeren Materials, welches die Mittel (12; 25, 26) zur Begrenzung der Bewegungen des beweglichen Teils (13; 22) einschließt, gebildet sind, und daß der Kanal großer Länge (19) teilweise durch einen umfänglichen Zurückstand (16) der Trennwand (10) und teilweise durch Bewehrungen (4, 7) des Blockes, welche den Umfangsteil (11) der Trennwand umgeben, begrenzt ist.

2. Elastischer Unterlageblock nach Anspruch 1, dadurch gekennzeichnet, daß der Zurückstand (16) sich in einer Ebene über nahezu den gesamten Umlauf der Trennwand (10) erstreckt und sich an jedem Ende in einer spiralförmigen Rinne (18) fortsetzt, welche sich von dieser Ebene entfernt und in eine der beiden Kammern (15, 16) mündet.

3. Elastischer Unterlageblock nach einem der Ansprüche 1 und 2, dadurch gekennzeichnet, daß die Trennwand (10) einen massiven und wenig verformbaren Umfangsteil (11) aufweist, welcher mit dem beweglichen Mittelteil (13) über eine dünne Schale (12) verbunden ist, welche wenigstens eine kreisförmige Welle ausbildet.

4. Elastischer Unterlageblock nach Anspruch 3, dadurch gekennzeichnet, daß der Mittelteil (13) und die Schale (12) eine in Richtung der Bewegung (X-X) des Mittelteils verformbare Versteifungsbewehrung (21) aufweisen.

5. Elastischer Unterlageblock nach einem der Ansprüche 1 und 2, dadurch gekennzeichnet, daß die Trennwand (10) einen massiven und wenig verformbaren Umfangsteil (11) und einen beweglichen Mittelteil aufweist, der durch eine Reihe (22) Von durch schmale Furchen (25, 26) getrennten Pflasterblöcken aus Elastomer gebildet ist, wobei diese Pflasterblöcke untereinander und mit dem Umfangsteil durch eine dünne Schale (23) Verbunden sind.

6. Elastischer Unterlageblock nach Anspruch 5, dadurch gekennzeichnet, daß die dünne Schale (23) eine in Richtung der Bewegung (X-X) des Mittelteils (22) deformierbare Versteifungsbewehrung (26) enthält.

7. Elastischer Unterlageblock nach einem der Ansprüche 5 und 6, dadurch gekennzeichnet, daß der Mittelteil (22) kreisförmig ist, wobei die Furchen (25, 26) konzentrisch kreisförmig und/oder radial sind.

## Claims

1. An elastic block, of the type comprising two chambers (14, 15) filled with liquid, defined at least in part by elastic walls and separated by a partition (10) comprising a movable portion (13; 22) which is very freely movable between two extreme positions in a direction (X-X) perpendicular to its mean plane, means (12; 25, 26) for limiting the movements of the movable portion to said extreme positions, and a passage (19) of great length and small section which provides a communication between the two chambers, characterised in that the partition (10) and its movable portion (13; 22) are made in a single piece based on an elastomeric material including means (12; 25, 26) for limiting the movements of the movable portion (13; 22) and the passage of great length (19) is defined in part by a peripheral recess (16) of the partition (10) and in part by reinforcements (4, 7) of the block which surround the peripheral portion (11) of the partition.

2. An elastic block according to claim 1, characterised in that the recess (16) extends in a plane in almost all of the perimeter of the partition (10) and is extended at each end by a helical groove (18) which extends away from this plane and opens into one of the two chambers (15, 16).

3. An elastic block according to one of the claims 1 and 2, characterised in that the partition (10) comprises a massive and only slightly deformable peripheral portion (11) connected to the central movable portion (13) by a thin web (12) forming at least one circular wave.

4. An elastic block according to claim 3, characterised in that the central portion (13) and the web (12) comprise a reinforcing element (21) which is deformable in the direction of movement (X-X) of the central portion.

5. An elastic block according to one of the claims 1 and 2, characterised in that the partition (10) comprises a massive and only slightly deformable peripheral portion (11), and a movable central portion formed by a series (22) of slabs of elastomer separated by narrow grooves (25, 26), these slabs being interconnected and connected to the peripheral portion by a thin web (23).

6. An elastic block according to claim 5, characterised in that the thin web (23) contains a reinforcing element (26) which is deformable in the direction of movement (X-X) of the central portion (22).

7. An elastic block according to one of the claims 5 and 6, characterised in that the central portion (22) is circular, the grooves (25, 26) being circular concentric and/or radial.

0 072 262

FIG.1

FIG.2

FIG.3

FIG.4

1

## FIG.5

## FIG.7

## FIG.6

## FIG.8